# EUROPÄISCHE PATENTSCHRIFT

(11) **EP 1 891 858 B1**
(45) Veröffentlichungstag und Bekanntmachung des Hinweises auf die Patenterteilung: **25.12.2013**
(21) Anmeldenummer: 07015071.9
(22) Anmeldetag: 01.08.2007
(51) Int. Cl.: A22C 15/00

(54) **Stabwechseleinrichtung an einer Übergabevorrichtung für hängende Verpackungseinheiten**
Bar changing device in a transfer device for hanging packaging units
Dispositif de passage sur un dispositif de transmission pour unités d'emballage suspendues

(30) Priorität: 22.08.2006 CH 13362006
(43) Veröffentlichungstag der Anmeldung: 27.02.2008
(73) Patentinhaber: Tipper Tie Alpina GmbH, 9230 Flawil (CH)
(72) Erfinder: Lapadatovic, Miljan, 9100 Herisau (CH)
(74) Vertreter: Schalch, Rainer

(56) Entgegenhaltungen:
- DE-B3- 10 340 632
- DE-C1- 3 930 876
- JP-A- 63 219 334
- US-A1- 2003 096 568

## Beschreibung

Die Erfindung betrifft eine Übergabevorrichtung gemäss Anspruch 1. Ferner betrifft die Erfindung eine Anordnung aus einer solchen Übergabevorrichtung und einer Fangvorrichtung für Verpackungseinheiten mit Halteschlaufen.

Es ist bekannt, Würste, an die beim Setzen des einen Verschlussclips eine Halteschlaufe befestigt worden ist, hängend an einem stabförmigen Element von der Verschliessmaschine (Clipmaschine) wegzufördern, so z.B. aus DE-OS 3437830 und DE-PS 3806467. Die an dem Element, das auch als Schwert bezeichnet wird, hängenden Würste sollen für die spätere Weiterverarbeitung an sogenannte Rauchstecken oder Rauchstangen bzw. einen Stab gehängt werden, mit denen die Würste dann zur Weiterverarbeitung, insbesondere zu einem Räuchervorgang, transportiert werden. EP-A 377 090 schlägt vor, die Würste vom Schwert auf das Obertrum einer Kette abzugeben. Der Kettenführungsrahmen ist um 180° schwenkbar, um die Würste an eine Rauchstange weiterzugeben. DE-B 10340632 zeigt das Fördern der Würste mittels einer Förderschnecke und von dieser die Abgabe an eine geneigt angeordnete und drehende Rauchstange, an der die Würste weitergefördert werden.

US 2003/0096568 A1 zeigt eine Vorrichtung gemäss dem Oberbegriff.

Der Erfindung liegt die Aufgabe zu Grunde eine Übergabevorrichtung zu schaffen, welche den möglichst unterbruchslosen Betrieb einer Übergabevorrichtung ermöglicht, die die hängenden Verpackungseinheiten vom Schwert an einen Stab übergibt.

Diese Aufgabe wird mit den Merkmalen des Anspruchs 1 gelöst.

Dadurch, dass die Vorrichtung einen Stabwechselschlitten aufweist, durch den mit einer Schlittenbewegung aus einer Ausgangsstellung in die eine Schlittenrichtung sowohl ein beladener Stab aus den Aufnahmemitteln wegführbar als auch ein zweiter Stab in die Aufnahmemittel einführbar ist, worin er durch die Übergabevorrichtung beladbar ist, ergibt sich ein sehr rascher und einfacher Stabwechsel in der Übergabevorrichtung, die dadurch praktisch unterbruchslos betrieben werden kann. Die Einrichtung kann Stäbe von beliebigem Format bzw. Querschnitt wechseln und ist somit für Stäbe von verschiedenen Herstellern verwendbar.

Vorzugsweise gibt der Schlitten den beladenen Stab an ein Fördermittel zur Aufnahme einer Mehrzahl beladener Stäbe weiter, so dass der Schlitten sofort nach der Abgabe des Stabes in seine Ausgangsstellung zurückfahren kann und die weitere Förderung der beladenen Stäbe nach der Weitergabe vom Schlitten unabhängig erfolgt. Das Fördermittel ist bevorzugt ein Kettenförderer oder Zahnriemenförderer mit einer Umlenkrolle, bei welcher die Kette oder der Riemen von einer im Wesentlichen vertikalen Richtung in eine im Wesentlichen horizontale Richtung übergeht, wobei ein vom Stabwechselschlitten weggeführter Stab vom Fördermittel übernehmbar und horizontal weiterförderbar ist. Dies ergibt eine kompakte Ausführung auch bei Bereitstellung einer grossen Anzahl beladener Stäbe. Erfindungsgemäß führt der die Wegführbewegung der beladenen Stäbe ausführende Schlittenteil bei der Schlittenrückbewegung in die Ausgangsstellung eine Absenkbewegung durch, womit der Schlitten unter dem abgesetzten leeren Stab hindurch in die Ausgangsstellung zurückfahren kann, in welcher der Schlitten eine Aufwärtsbewegung ausführt. In der Ausgangstellung ist der Schlitten mit einem Stab aus dem Stabmagazin beladbar, indem vorzugsweise das Stabmagazin zur Aufnahme mehrerer vertikal über dem Schlitten zu liegen kommender Stäbe ausgestaltet ist, von denen der unterste Stab schwerkraftabhängig in den Schlitten gelangt. Dies ergibt eine einfache und rasche Beladung. Sie kann so ausgeführt sein, dass an der Einrichtung oder am Magazin eine steuerbare Rückhaltung für den untersten Stab im Magazin und eine synchron steuerbare weitere Rückhaltung für den zweituntersten Stab im Magazin vorgesehen ist. Somit kann der unterste Stab in den Schlitten fallen, während der zweitunterste Stab zurückgehalten wird. Dieser kann dann nach der Beladung des Schlittens die unterste Position im Magazin einnehmen.

Bevorzugterweise ist die Übernahmevorrichtung so ausgestaltet, dass ein Auslösemittel steuerbar an wählbaren Positionen ein Loslassen der Verpackungseinheiten bzw. Würste durch die Erfassungsmittel bewirkt; damit kann ein definiertes Absetzen der Verpackungseinheiten auf dem zweiten Element erfolgen. Dies lässt sich somit nach Wunsch und optimal beladen. Insbesondere lässt sich der Abstand der Verpackungseinheiten voneinander auf dem zweiten Element auf einfache Weise bestimmen. Bevorzugt sind die Erfassungsmittel als Greifmittel und insbesondere als an einem umlaufenden Fördermittel, wie einer Kette oder einem Zahnriemen, angeordnete Haken vorgesehen. Damit können die Verpackungseinheiten einzeln gegriffen und über die Rauchstange bzw. das zweite Element gefördert werden. Dort wirkt dann das steuerbare, positionierbare Auslösemittel zum Lösen des Griffes der Greifmittel. Dies erfolgt vorzugsweise, indem die Haken schwenkbar sind, was durch das Auslösemittel bewirkt wird. Durch die Schwenkbewegung der Haken gleiten die Halteschlaufen von diesen ab oder werden abgestreift und die Verpackungseinheit wird an der vom Auslösemittel bestimmten Position abgesetzt. Das Auslösemittel ist vorzugsweise ein Auslöseblock, der entgegen der Förderrichtung verfahrbar ist und so auf durch die Steuerung bestimmte Weise auf die Haken zu deren Auslösung zum Loslassen trifft. Dies ermöglicht eine praktisch stufenlose Positionierung der Verpackungseinheiten entlang des zweiten Elementes.

Die Anordnung aus der Übergabevorrichtung mit Stabwechseleinrichtung gemäss der Erfindung und der die Verpackungseinheiten bzw. Würste am Ausgang der Verschliessvorrichtung fangenden Fangvorrichtung ergibt ein einfaches automatisiertes Aufbringen der Verpackungseinheiten auf Rauchstecken und deren Bereitstellung für die Weiterverarbeitung der Würste.

Im folgenden werden Ausführungsbeispiele der Erfindung anhand der Figuren näher erläutert. Dabei zeigt
Figur 1 eine Seitenansicht einer Übergabevorrichtung gemäss einem Ausführungsbeispiel der Erfindung;
Figur 2 eine Frontalansicht der Übergabevorrichtung von Figur 1;
Figur 3 eine Detailansicht der Übergabevorrichtung von Figur 2 mit dem Schlitten;
Figur 4 eine Ansicht von oben auf ein erstes stabförmiges Element (Schwert), von welchem die hängenden Verpackungseinheiten mittels der Übergabevorrichtung abgegriffen werden;
Figur 5 eine Detailansicht der Greifmittel und des Auslösemittels; und
Figur 6 eine Seitenansicht einer Verschliessvorrichtung und eines Teils der Fangvorrichtung einer Anordnung aus diesen Vorrichtungen und einer Übergabevorrichtung.

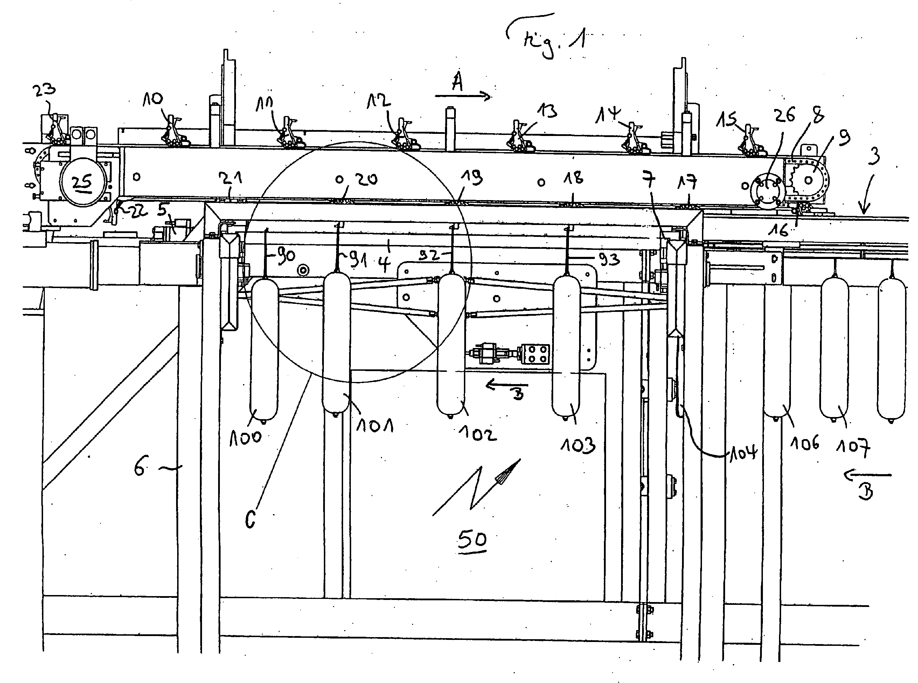

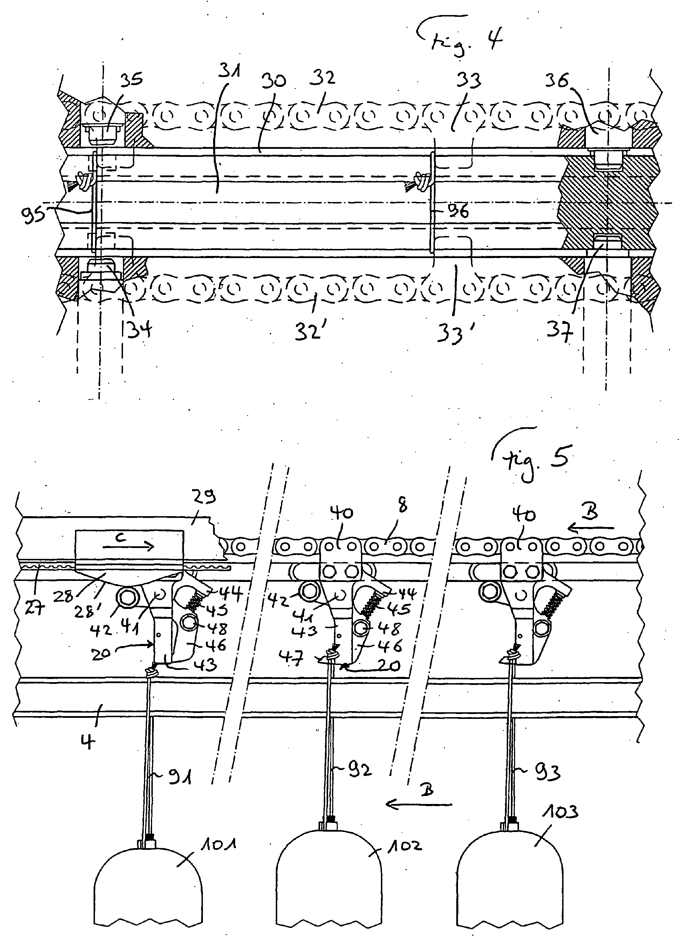

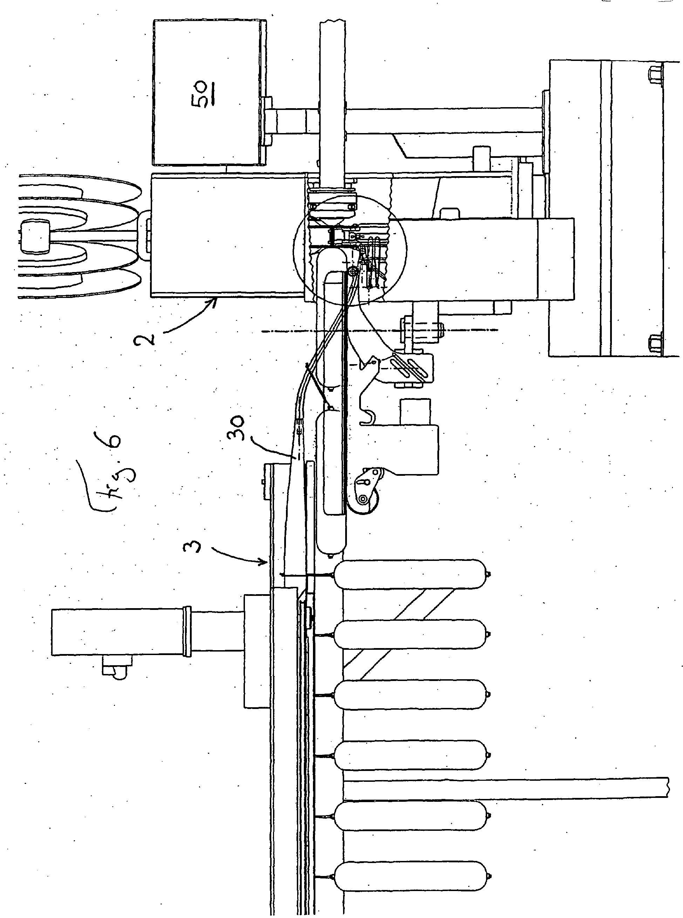

Figur 1 zeigt eine Übergabevorrichtung 1 in Seitenansicht. Dieser werden an Halteschlaufen hängende Verpackungseinheiten von einer Fangvorrichtung 3 her zugeführt, welche diese Verpackungseinheiten von einer Verschliessvorrichtung übernommen hat, welche in Figur 6 dargestellt ist und noch erläutert wird. Die Fangvorrichtung 3 fördert die Verpackungseinheiten, welche in dem gezeigten Beispiel Würste sind, welche aber auch andere Gegenstände sein können, entlang eines zweiten stabförmigen Elementes 30, das auch als Schwert bezeichnet wird, und welches ebenfalls in Figur 6 in Seitenansicht ersichtlich ist sowie in Figur 4 in Draufsicht. Die Übergabevorrichtung 1 erfasst, und insbesondere greift, die Verpackungseinheiten im Endbereich des Schwertes, in welchem dieses an die Übergabevorrichtung 1 anschliesst. Die Übergabevorrichtung 1 ist zur lösbaren Halterung eines ersten stabförmigen Elementes bzw. Stabes 4, welches in der Regel ein Rauchstecken ist, wenn es sich bei den Verpackungseinheiten um Würste handelt, ausgestaltet. Die Übergabevorrichtung übergibt die am Schwert 30 hängenden Verpackungseinheiten an den Stab 4. Dieser wird in der Übergabevorrichtung 1 so gehalten, dass er im wesentlichen koaxial mit dem Schwert 30 der Fangvorrichtung angeordnet und gehalten werden kann.

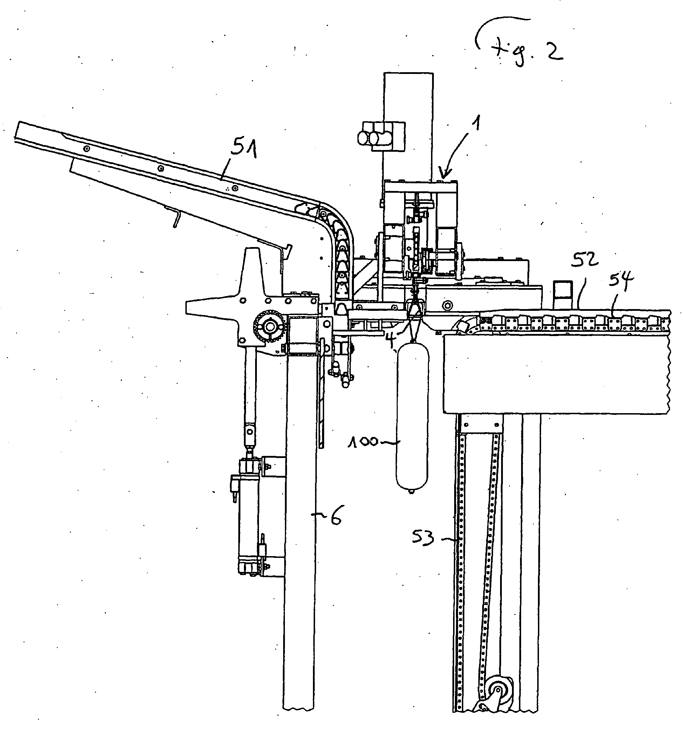

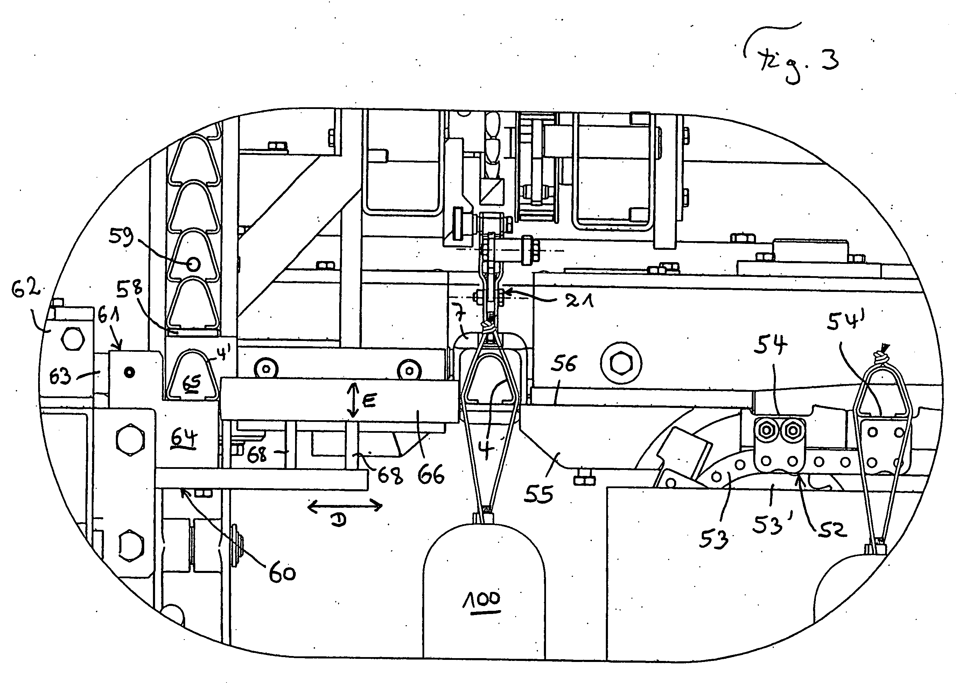

Figur 2 zeigt eine stirnseitige Ansicht der bereits beschriebenen Übergabevorrichtung 1. Ersichtlich ist wiederum der Rauchstecken bzw. Stab 4, der in der Übergabevorrichtung in Aufnahmemitteln lösbar gehalten ist. Zu dieser Aufnahme bzw. Halterung des Stabes 4 in der Stellung, in der er mit den Verpackungseinheiten beladen wird, kann ein erstes stirnseitiges Halteteil 7 und ein zweites stirnseitiges Halteteil vorgesehen sein (Figur 1) wobei mindestens eines der Halteteile, in Figur 1 das Halteteil 5, angetrieben ist, z.B. pneumatisch angetrieben ist, um eine lösbare Halterung des Rauchsteckens zu bewirken. Sobald ein Rauchstecken 4 beladen ist, so wird er weggeführt und durch einen leeren Rauchstecken ersetzt, was nachfolgend anhand Figur 3 näher beschrieben wird. Der neu in die Beladestellung gebrachte Stab 4 wird dann wiederum durch die Übergabevorrichtung 1 mit Würsten beladen. In Figur 2 ist ein Fördermittel 52 dargestellt, welches über eine Kette 53 mit einer Umlenkung 53' (Figur 3) von einem nicht auf der Zeichnung ersichtlichen Antrieb angetrieben ist, die die einzelnen Stäbe 4 von der Übergabevorrichtung wegführt und eine Vielzahl von beladenen Stäben 4 zur Weiterverarbeitung der daran gehaltenen Würste bereitstellt. Eine weitere Kette 53 ist auch auf der anderen Seite der Einrichtung für die anderen Enden der Stäbe vorgesehen. Die beiden Ketten werden über eine (nicht gezeigte) gemeinsame Antriebswelle synchronisiert, die im gezeigten Beispiel unterhalb der am Stab hängenden Würste liegt, aber im Falle einer Kettenführung der Kette 53 vertikal nach oben anstelle der gezeigten Kettenführung nach unten oberhalb der Rauchstäbe liegen würde. Mit 51 ist ein Magazin für die Stäbe 4 bezeichnet, aus welchem ein leerer Stab 4 bzw. Rauchstecken wieder in die Haltestellung in der Übergabevorrichtung 1 gebracht werden kann. Die Übergabevorrichtung ist vorzugsweise als selbststehende Einheit mit einem Gestell 6 ausgerüstet, mittels welchem sie am Ende der Fangvorrichtung 3 angeordnet werden kann.

Die an der Übergabevorrichtung angeordnete Stabwechseleinrichtung ist mit 60 bezeichnet und weist z.B. für die beiden Enden des Stabes 4 bzw. bei beiden Aufnahmen 5,7 für den Stab je einen Schlitten 61 auf, der eine translatorische Hin- und Herbewegung in Richtung des Pfeiles D ausführen kann. Natürlich könnte entlang des Stabes, z.B. in dessen Mitte, ein weiterer Schlitten angeordnet sein. In der Figur ist gemäss der Art der Frontalansicht nur der Schlitten am vorderen Ende des Stabes bzw. im Bereich der Aufnahme 5 dargestellt, welche selber in der Figur nicht dargestellt ist, so dass der Blick auf das freie Ende des Stabes 4 ersichtlich ist, der in der Aufnahme 5 gehalten wäre. Die weitere Beschreibung erfolgt nur anhand des einen Schlittens der Stabwechseleinrichtung, doch ist der zweite Schlitten der Einrichtung am anderen Stabende entsprechend ausgeführt, bzw. wäre ein ggf. vorgesehener dritter oder gar vierter Schlitten entsprechend ausgeführt. Ein feststehender Teil 62 der Stabwechseleinrichtung enthält den Linearantrieb für die Schlitten, der z.B. von einer pneumatischen Kolben- Zylinderanordnung gemeinsam für beide Schlitten oder jeweils für jeden Schlitten einzeln gebildet sein kann. Auch andere Antriebsvarianten sind möglich und dem Fachmann zur Ausführung einer hin- und herlaufenden Schlittenbewegung geläufig. Über das Glied 63 erfolgt der Antrieb eines ersten Schlittenteiles 64, das über einen weiteren Schlittenteil 67 mit dem Wegführteil 66 des Schlittens in Verbindung ist. Der Teil 64 bildet eine Aufnahme 65 für den nächsten in Beladestellung zu bringenden Stab 4' aus. Das Wegführteil 66 des Schlittens reicht bis zum Stab 4, der sich in den Aufnahmemitteln 5, 7 der Übergabevorrichtung und somit in Beladestellung befindet. Das Wegführteil 66 kann den Stab auch teilweise untergreifen, um ihn beim Wegführen abzustützen. In der dargestellten Beladestellung für den Stab wird der Stab 4 von der Übergabevorrichtung mit den Verpackungseinheiten, insbesondere Würsten, beladen, was in den Figuren 2 und 3 mit der Wurst 100 dargestellt ist und nachfolgend noch genauer erläutert wird.

Ist der Stab 4 vollständig beladen, so wird der Schlitten 61 in Figur 3 nach rechts gefahren. Ebenso werden die Aufnahmemittel 5,7 für den Stab 4 gelöst, so dass dieser vom Schlitten 61, bzw. vom Schlittenteil 66 nach rechts weggeführt werden kann. Eine Führung 55 mit einer Gleitfläche 56 (natürlich jeweils wieder für beide Endbereiche des Stabes vorgesehen) lässt den Stab 4 gestossen vom Schlittenteil 66 über die Gleitfläche 56 zum Fördermittel 52 gelangen, wo der Stab 4 in diejenige der Aufnahmetaschen(Tasche 54) aufgenommen wird, die vorgängig nach oben bewegt worden ist und dort auf den Stab 4 wartet. Die vorgängig von dem Fördermittel nach oben bewegte Aufnahmetasche 54' ist bereits vom vorgängig beladenen und vom Schlitten weggeführten Stab besetzt, weitere Taschen, die aber in der Figur nicht dargestellt sind, sind mit weiteren vorgängigen Stäben besetzt. So wird das Fördermittel nach und nach entlang seiner ganzen horizontalen Ausdehnung mit beladenen Stäben gefüllt. Bevorzugt ist das erläuterte Vorgehen, bei dem die Aufnahmetasche stillsteht und auf den Stab 4 wartet. Nachfolgend wird dann jeweils die Kette 53 angetrieben und die nächste Tasche 54 in Wartestellung gebracht. Es könnte aber auch so vorgegangen werden, dass die jeweils mit dem Stab zu beladende Tasche vom Antrieb der Kette 53 genau dann in Beladeposition gebracht wird, wenn der Stab vom Schlitten angeliefert wird, was allerdings eine feinere Synchronisation zwischen dem Schlitten und dem Antrieb der Kette 53 benötigt.

Ist ein Stab 4 auf die beschriebene Weise von der Beladestellung weggeführt worden, so gelangt andererseits mit der gleichen Schlittenbewegung der nächste leere Stab 4' in der Aufnahme 65 des Schlittens in die Beladeposition der Übergabevorrichtung und kann dort von den Aufnahmemitteln 5,7 derselben fixiert werden. Für die Rückbewegung des Schlittens in der Figur nach links wird das Schlittenteil 66 gemäss Pfeil E entlang der Führungen 68 abgesenkt, damit der Schlitten unter dem nun in Beladepositon befindlichen Stab 4' zurück in die Ausgangsstellung fahren kann, in der der Schlittenteil wieder in die dargestellte hochgefahrene Stellung bewegt wird. Die Bewegung nach unten und nach oben des Schlittenteils 66 entlang den Führungen 68 wird z.B. ebenfalls pneumatisch oder mittels Elektromagneten bewirkt, was hier nicht weiter erläutert wird, da dem Fachmann ohne Weiteres ersichtlich ist, wie er eine entsprechende Bewegung bewirken kann.

Der Schlitten 61 ist somit wieder in der dargestellten Position (Ausgangsstellung) und der Stab 4' ist nun in der Beladeposition und wird beladen. Die Aufnahme 65 am Schlitten für den nächsten Stab ist aber noch leer. Bevorzugt erfolgt die Einbringung des nächsten Stabes in die Aufnahme 65 durch ein schwerkraftbewirktes Fallenlassen des nächsten Stabes 4" aus dem Magazin 51. Dazu ist dieses oder ist die Stabwechseleinrichtung 60 mit Halteteilen 58 versehen, die angetrieben (z.B. pneumatisch oder elektromagnetisch) wegbewegt, z.b. weggezogen, werden können, so dass der Stab 4' in die Aufnahme 65 fällt. Damit nur der Stab 4' fällt und nicht auch der Stab 4" und die weiteren Stäbe im Magazin, ist ein Rückhaltemittel 59 für den zweituntersten Stab 4" des Magazins vorgesehen, z.B. in Form von in den Stab 4" beiderends einfahrbaren Bolzen 59. Damit wird der Stab 4" gehalten, wenn die Halteteile 58 offen sind und der Stab 4' in die Aufnahme fällt. Sobald die Halteteile 58 wieder geschlossen sind und die Aufnahme 65 zum Magazin 51 hin schliessen, werden die Bolzen 59 wieder zurückgezogen, so dass der Stab 4" sich nach unten bewegt, bis er auf den Haltemitteln 58 aufliegt und damit den untersten Stab des Magazins bildet. Der Vorgang wiederholt sich dann von der gezeigten Augangsstellung aus mit erneutem Wegführen des beladenen Stabes, dessen Aufnahme auf das Fördermittel 52, dem Halten des nächsten leeren Stabes in der Beladeposition und dem Zurückfahren des Schlittens und dessen Befüllung in der Aufnahme 65 mit dem untersten Stab aus dem Magazin. Es ergibt sich ein rascher Stabwechsel, bei dem die Beladung von Stäben nur kurzzeitig unterbrochen wird. Das Magazin 51 kann bevorzugt auch in Gegenrichtung gebogen, also auf das Fördermittel 52 hin gebogen ausgeführt sein, was eine kompaktere Anordnung der Stabwechseleinrichtung und eine Befüllbarkeit des Magazins von der Seite der Fördereinrichtung 52 her ergibt.

Nachfolgend wird eine bevorzugte Ausführungsform der Übergabevorrichtung geschildert. Die Stabwechseleinrichtung ist aber grundsätzlich in der Ausführung mit Schlitten bei allen Arten von Übergabevorrichtungen, die den Stab endseitig halten, anwendbar.

Im dargestellten Beispiel von Figur 1 sind die Erfassungsmittel der Übergabevorrichtung 1 zum Greifen der Halteschlaufen am zweiten stabförmigen Element bzw. am Schwert 30 als Haken 10-23 ausgeführt, welche an einem umlaufenden Fördermittel befestigt sind, welches im gezeigten Beispiel eine Kette 8 ist, die am einen Ende der Übergabevorrichtung, welches der Fangvorrichtung 3 benachbart ist um ein Kettenrad 9 umgelenkt wird. Am anderen Ende der Übergabevorrichtung läuft die Kette ebenfalls um ein Kettenrad, welches von einem steuerbaren Antrieb 25 angetrieben wird. Die nur schematisch dargestellte Steuerung 50 ist entsprechend mit Steuerleitungen mit dem Antrieb 25 verbunden. Dieser Antrieb ist z.B. ein elektromotorischer Antrieb mit einem Servomotor. Die Greifmittel 10-23 laufen mit der Kette 8 in Richtung des Pfeiles A und werden im Bereich des Endes der Fangvorrichtung 3 umgelenkt. Bei der gezeigten Ausführungsform erfolgt das Greifen der Halteschlaufen der Verpackungseinheiten derart, dass die hakenförmigen Greifmittel nach der Umlenkung in eine oberseitige Nut 31 des Schwertes 30 eintauchen, über welche Nut sich die Halteschlaufe spannt.

In Figur 4 ist eine Draufsicht auf einen Teil des Schwertes 30 mit der Nut 31 sowie mit Halteschlaufen 96 und 95 gezeigt, welche die Nut 31 überspannen. Mit dem Eintauchen eines der hakenförmigen Greifmittel in die Nut 31 und einer schnelleren Bewegung des Greifmittels als es der Fördergeschwindigkeit der Halteschlaufen bzw. Verpackungseinheiten entlang des Schwertes entspricht, kann somit jeweils eine Halteschlaufe von dem Haken gegriffen und dadurch durch das Greifmittel übernommen werden. Figur 4 zeigt die Förderung der Halteschlaufen 95 und 96 am Schwert mittels Förderlaschen 33, 33' welche in seitliche Nuten des Schwertes 30 eingreifen und damit jeweils die Halteschlaufe mit der Geschwindigkeit der Ketten 32 und 32' fördern, an welchen die Förderlaschen 33 bzw. 33' befestigt sind. Damit die Halteschlaufen über das Schwert gefördert werden können, ist dieses fliegend mittels mehreren Paaren von Haltebolzen gehalten, welche jeweils beim Passieren einer Halteschlaufe vom Schwert zurückgezogen werden, wobei in dieser Zeit das Halten des Schwertes durch andere Haltebolzenpaare übernommen wird. Dies ist.grundsätzlich bekannt. In der Figur 4 sind dazu als Beispiel lediglich die Haltebolzenpaare 34, 35 sowie 36, 37 dargestellt. Sobald ein hakenförmiges Greifmittel die Halteschlaufe gegriffen hat, wird sie durch das etwas schneller als die Ketten 32, 32' der Fangvorrichtung 3 laufende Greifmittel bis zum Ende des Schwertes weitergefördert und ab dort nur noch am Haken hängend weitergefördert. In Figur 1 ist ersichtlich, wie am Ende der Fangvorrichtung 3 einzelne Würste 107, 106 und 105 in Pfeilrichtung B gefördert werden, wobei die Wurst 107 mit ihrer Halteschlaufe 96 am Schwert hängt und noch durch die Förderlaschen 33, 33' gefördert wird. Die Wurst 106 mit ihrer in der Figur nicht ersichtlichen Halteschlaufe wird nächstens durch das bereits umgelenkte Greifmittel 16 ergriffen und entsprechend durch dieses bis zum Ende des Schwertes gefördert. Die Ketten 32, 32' der Fangvorrichtung sind vorher umgelenkt worden und haben die Förderung entlang des Schwertes 30 an dieser Stelle schon beendet. Ganz am Ende des Schwertes befindlich ist ein vorher umgelenktes Greifmittel 17, an welchem die nur teilweise ersichtliche Wurst 104 hängt. Die Greifmittel 18, 19 und 20, an welchen jeweils die Würste 103, 102 und 101 mittels der Halteschlaufen 93, 92 und 91 gehalten sind fördern diese in Richtung des Pfeiles B über den Rauchstecken 4. Da der Rauchstecken im westentlichen koaxial mit dem Schwert angeordnet ist, umfassen die Halteschlaufen, welche vorgängig das Schwert umfasst haben, nun den Rauchstecken 4. Die vorderste Verpackungseinheit 100 mit der Halteschlaufe 90 ist bereits vom Greifmittel 21 losgelassen worden, so dass die Verpackungseinheit nun hängend am Rauchstecken und von diesem gehalten angeordnet und positioniert ist. Das gezeigte Beispiel mit dem kontinuierlich umlaufenden Fördermittel mit den daran angeordneten Greifmitteln ist als bevorzugtes Beispiel zu verstehen. Es können auch anders ausgestaltete und bewegte Erfassungsmittel vorgesehen sein, z.B. solche, welche bis zum Ende des Schwertes durch die Fangvorrichtung geförderte Verpackungseinheiten beim Abfallen derselben vom Schwert in ihren Halteschlaufen auffangen, z.B. mit Haken oder Stiften, und diese wiederum durch gemeinsame synchrone Förderung oder auch durch einzelne, asynchrone Förderung entlang des Rauchsteckens fördern.

Figur 5 zeigt nun eine Detailansicht der Greifmittel, die als Haken ausgebildet sind und deren Auslösung durch ein Auslösemittel zum Loslassen der jeweiligen Halteschlaufe. In Figur 5 ist wieder die Kette 8 ersichtlich, an welcher die Greifmittel 18, 19 und 20 durch Befestigungsmittel 40 fest angeordnet sind. Das einzelne Greifmittel ist in diesem bevorzugten Beispiel als Haken ausgeführt, welcher ein schwenkbares Hakenteil aufweist, das aus seiner Greifstellung zum Greifen der Halteschlaufen in eine Loslassstellung bewegbar ist. Der einzelne Haken weist in diesem Beispiel ein feststehendes Hakenteil 43 auf, das an der Lasche 40 befestigt ist. Feststehend ist ebenfalls das Abstützteil 44 für ein Federmittel 45, im gezeigten Beispiel eine Druckfeder. Ein schwenkbares Hakenteil 46 mit dem Hakenende 47 ist um eine Achse 41 am feststehenden Hakenteil 43 schwenkbar befestigt. Am schwenkbaren Hakenteil 46 ist weiter ein Löseteil 42 angeordnet. Dies kann z.B. ein feststehendes Element oder eine drehbare Rolle sein. Die Greifmittel 18 und 19 sind in Figur 5 in Greifstellung gezeigt. In dieser Stellung sind sie vorgängig in die Nut 32 des Schwertes 30 eingetaucht und haben die jeweilige Halteschlaufe 93 bzw. 92 der Wurst 103 bzw. 102 an dem die Nut 30 überspannenden Halteschlaufenteil gegriffen. Die Würste 102 und 103 hängen somit an den Greifmitteln 18 und 19 während gleichzeitig der Rauchstecken 4 die Halteschlaufe durchsetzt. Durch das Fördermittel bzw. die Kette 8 werden die Würste in Richtung des Pfeiles B gefördert. Anhand des Greifmittels 20 wird nun das Loslassen einer Verpackungseinheit gezeigt. Dazu wird das bewegliche, schwenkbare Hakenteil 46 entgegen der Kraft der Druckfeder 45 geschwenkt, so dass die Hakenspitze 47 sich hinter das feststehende Hakenteil zurückzieht und die Halteschlaufe von der Hakenspitze 47 abgestreift wird. Diese Lösung mit der Abstreifung ist ein bevorzugtes Beispiel. Der Haken könnte auch soweit geschwenkt werden, dass die Halteschlaufe lediglich durch die Schrägstellung der Hakenspitze von selber von dieser abrutscht und somit auf den Rauchstecken 4 gelangt. Das Schwenken des beweglichen Hakenteils 46 wird durch ein Auslösemittel bewirkt. Dieses Auslösemittel ist im gezeigten Beispiel ein Auslöseblock 28 mit einer Steuerkurve 28', durch welche das jeweilige Löseteil 42 beaufschlagbar ist, um die Schwenkbewegung des beweglichen Hakenteils 46 um die Schwenkachse 41 bewirken. Der Auslöseblock 28 ist dabei z.B. in einer Schiene 29 geführt und wird durch ein Fördermittel 27 in Richtung des Pfeiles C angetrieben. Das Auslösemittel läuft somit dem Fördermittel der Greifmittel entgegengesetzt und trifft damit auf seinem Weg von der dem Schwert abgewandten Ende des Rauchsteckens zu dem schwertseitigen Ende des Rauchsteckens nach und nach auf alle durch die Greifmittel geförderten Verpackungseinheiten. Durch die Steuerung des angetrieben bewegten Auslösemittels kann somit bestimmt werden, an welcher Position entlang des Rauchsteckens die Greifmittel die Verpackungseinheiten loslassen. Zum gesteuerten Antrieb des Auslösemittels kann ein Motor 26 (Figur 1) vorgesehen sein, welcher den Zahnriemen 27 antreibt. Der Motor 26 ist ebenfalls mit der Steuerung 50 verbunden, welche somit bestimmen kann, an welcher Position eine einzelne Verpackungseinheit abgesetzt bzw. losgelassen wird. Auch das Auslösemittel kann natürlich anders ausgeführt werden, als in dem bevorzugten Beispiel gezeigt. So könnten eine Vielzahl von fest positionierten Auslösemitteln vorgesehen sein, welche einzeln ansteuerbar sind, um auf ein Löseteil der Greifmittel einzuwirken. Solche einzelnen Auslösemittel könnten z.B. elektromagnetisch oder pneumatisch betätigt werden. Auch auf diese Weise kann das Loslassen und Positionieren bewirkt werden, wobei in diesem Fall die Position nicht stufenlos durch Verfahren des Auslöseblockes gewählt werden kann, sondern fix durch die Anordnung der einzelnen Auslösemittel gegeben ist.

Die Steuerung 50 ist vorzugsweise ebenfalls für die Steuerung der Stabwechseleinrichtung 60 ausgebildet und für die Steuerung der Mittel 58 und 59 im Magazin.

Auf die geschilderte Weise wird eine Anordnung aus Übergabevorrichtung 1 mit Stabwechseleinrichtung 60, Fangvorrichtung 3 sowie einer Verschliessmaschine 2 für die wurstförmigen Verpackungen gebildet, wie dies in den Figuren 1 und 6 dargestellt ist. Die Verschliessvorrichtung 2 ist dabei eine bekannte Verschliessvorrichtung, welche Verschlussclips an den wurstförmigen Verpackungseinheiten setzt. Dabei wird auch die Halteschlaufe an der jeweiligen Verpackungseinheit befestigt. Die Fangvorrichtung 3 mit dem Schwert 30 übernimmt die einzelnen Halteschlaufen und damit die Verpackungseinheiten und transportiert diese entlang des Schwertes 30 auf die beschriebene Weise oder auf eine andere Art. Danach schliesst sich die im Detail beschriebene Übergabevorrichtung 1 an. Vorzugsweise ist eine Steuerung 50 vorgesehen, die z.B. die Steuerung der Verschliessmaschine 2 ist, die alle Antriebe der Verschliessvorrichtung, der Fangvorrichtung und der Übergabevorrichtung inklusive Stabwechseleinrichtung synchronisiert steuert, wenigstens aber die Antriebe der Fangvorrichtung und der Übergabevorrichtung. Es können auch einzelne Steuerungen bei den Vorrichtungen vorhanden sein, die miteinander synchronisiert sind.

## Patentansprüche

1. Übergabevorrichtung (1), in welcher ein Stab (4) von Aufnahmemitteln (5,7) in einer Beladestellung gehalten mit am Stab hängenden Verpackungseinheiten beladbar ist und welche ein Stabmagazin (51) und eine Stabwechseleinrichtung (60) umfasst, **dadurch gekennzeichnet, dass** die Stabwechseleinrichtung (60) einen Stabwechselschlitten (61) aufweist, durch den mit einer Schlittenbewegung aus einer Ausgangsstellung in die eine Schlittenrichtung sowohl ein beladener Stab (4) aus den Aufnahmemitteln (5,7) wegführbar als auch ein zweiter Stab (4') in die Aufnahmemittel einführbar ist, wobei der die Wegführbewegung für den beladenen Stab ausführende Schlittenteil (66) bei der Schlittenrückbewegung in die Ausgangsstellung zur Ausführung einer Absenkbewegung und zur Aufwärtsbewegung in die Ausgangsstellung ausgestaltet ist.

2. Übergabevorrichtung nach Anspruch 1, **dadurch gekennzeichnet, dass** diese ein Fördermittel (52) zur Aufnahme einer Mehrzahl beladener Stäbe aufweist, welches von dem Schlitten jeweils mit einem beladenen Stab bedienbar ist.

3. Übergabevorrichtung nach Anspruch 2, **dadurch gekennzeichnet, dass** das Fördermittel für die Stäbe ein beidseits an diesen wirkender Kettenförderer oder Zahnriemenförderer mit Umlenkrollen (53') ist, bei welchen die Ketten oder die Riemen von einer im Wesentlichen vertikalen Richtung in eine im Wesentlichen horizontale Richtung übergehen, wobei eine vom Stabwechselschlitten weggeführter Stab vom Fördermittel übernehmbar und horizontal weiterförderbar ist.

4. Übergabevorrichtung nach einem der Ansprüche 1 bis 3, **dadurch gekennzeichnet, dass** der Schlitten in der Ausgangstellung mit einem Stab aus dem Stabmagazin beladbar ist, indem das Stabmagazin zur Aufnahme mehrerer vertikal über dem Schlitten zu liegen kommender Stäbe ausgestaltet ist, von denen der unterste schwerkraftabhängig in den Schlitten gelangt.

5. Übergabevorrichtung nach Anspruch 4, **dadurch gekennzeichnet, dass** an der Einrichtung oder am Magazin eine steuerbare Rückhaltung (58) für den untersten Stab (4") im Magazin und eine synchron steuerbare weitere Rückhaltung (59) für den zweituntersten Stab im Magazin vorgesehen ist.

6. Übergabevorrichtung nach einem der Ansprüche 1 bis 5, **dadurch gekennzeichnet, dass** sie zur Übergabe von an einem ersten stabförmigen Element (30) mittels Halteschlaufen (90-96) hängend angeordneten Verpackungseinheiten an ein zweites stabförmiges Element (4) ausgestaltet ist, wobei Erfassungsmittel (10-22), durch welche die Halteschlaufen erfassbar und über das zweite stabförmige Element förderbar sind sowie Auslösemittel (27,28) vorgesehen sind, durch welche steuerbar bei wählbaren Positionen entlang des Förderweges auf die Erfassungsmittel einwirkbar ist, um das jeweilige Erfassungsmittel zum Loslassen der Halteschlaufe zu bewegen.

7. Übergabevorrichtung nach einem der Ansprüche 1 bis 6, **dadurch gekennzeichnet, dass** sie Aufnahmemittel (5,7) für das lösbare Halten des zweiten stabförmigen Elementes (4) aufweist.

8. Übergabevorrichtung nach einem der Ansprüche 1 bis 7, **dadurch gekennzeichnet, dass** ein umlaufendes Fördermittel (8), insbesondere eine Kette oder ein Zahnriemen, zur Förderung der Erfassungsmittel vorgesehen ist.

9. Übergabevorrichtung nach einem der Ansprüche 1 bis 8, **dadurch gekennzeichnet, dass** eine Anordnung an dem ersten stabförmigen Element (30) derart erfolgt, dass dieses und ein in den Aufnahmemitteln gehaltenes zweites stabförmiges Element (4) im Wesentlichen koaxial zu liegen kommen.

10. Übergabevorrichtung nach einem der Ansprüche 1 bis 9, **dadurch gekennzeichnet, dass** die Erfassungsmittel als Greifmittel ausgestaltet sind und dass die Greifmittel insbesondere von um eine Schwenkachse (41) schwenkbaren Haken (46,47) gebildet werden, die durch ein Federmittel (45) in eine Greifstellung vorgespannt und die durch Druck auf ein Löseteil (42) entgegen der Federkraft in die Loslassstellung schwenkbar sind.

11. Übergabevorrichtung nach einem der Ansprüche 1 bis 10, **dadurch gekennzeichnet, dass** das Auslösemittel zur Förderrichtung entlang des Fördermittels verfahrbaren Auslöseblock (28) gebildet ist.

12. Übergabevorrichtung nach Anspruch 11, **dadurch gekennzeichnet, dass** der Auslöseblock eine Steuerkurve (28') aufweist, mit der auf das Löseteil einwirkbar ist.

13. Übergabevorrichtung nach Anspruch 11 oder 14, **dadurch gekennzeichnet, dass** der Auslöseblock an einem antreibbaren weiteren Födermittel, insbesondere einem Zahnriemen (27), befestigt ist.

14. Übergabevorrichtung nach einem der Ansprüche 1 bis 13, **dadurch gekennzeichnet, dass** diese eine Steuerung (50) aufweist, durch die die Stabwechseleinrichtung (60) und das Auslösemittel steuerbar sind.

15. Anordnung umfassend ein erstes stabförmiges Element (30), welches ein Schwert einer Fangvorrichtung (3) ist, die mit Halteschlaufen versehene Verpackungseinheiten am Ausgang einer Verschliessvorrichtung (2) fängt und an den Halteschlaufen hängend entlang des Schwertes transportiert, und eine Übergabevorrichtung (1) nach einem der Ansprüche 1 bis 14, welche die Verpackungseinheiten im Endbereich des Schwertes greift.

16. Anordnung nach Anspruch 15, **dadurch gekennzeichnet, dass** das Schwert eine oberseitig offene Längsnut aufweist, die von den Halteschlaufen überspannbar ist und in welche die als Greifmittel ausgestalteten Erfassungsmittel eingreifen.

## Claims

1. Transfer device (1) inside which a bar (4) being kept by receiving means (5, 7) in a loading position can be loaded with packaging units hanging at the bar, comprising a bar storage (51) and a bar changing device (60), **characterized in that** the bar changing device (60) has a bar changing carriage (61) by means of which a charged bar (4) can be guided away from the receiving means (5, 7) as well as a second bar (4') can be inserted into the receiving means by a movement of the carriage from an initial position in the carriage direction, wherein the part of the carriage (66) executing the movement of guiding away the charged bar is adapted to perform a movement downwards during the return of the carriage in the initial position and a movement upwards into the initial position.

2. Transfer device according to claim 1, **characterized in that** it has a transport means (52) for receiving a plurality of charged bars, which can be loaded with a charged bar by the carriage.

3. Transfer device according to claim 2, **characterized in that** the transport means is a chain conveyor or a toothed belt conveyor with deflection rollers (53') acting upon the bars on both of their sides, the chains or the belts of which pass from a substantially vertical direction in a substantially horizontal direction, wherein a bar which has been moved away by the bar changing carriage can be taken over by the transport means and transported further in a horizontal direction.

4. Transfer device according to one of the claims 1 to 3, **characterized in that** the carriage can be loaded with a bar from the bar storage in the initial position, in such a way that the bar storage is adapted to receive a plurality of bars which come to lie vertically above the carriage, wherein the lowermost bar enters the carriage depending on the gravitational force.

5. Transfer device according to claim 4, **characterized in that** a controllable retainer (58) at the device or at the storage is provided in the storage for the lowermost bar (4'') and a synchronously controllable further retainer (59) is provided in the storage for the second lowermost bar.

6. Transfer device according to one of the claims 1 to 5, **characterized in that** it is adapted to transfer packaging units hanging at a first bar-shaped element (30) by means of straps (90-96) to a second bar-shaped element (4), wherein catch means (10-22) by means of which the straps can be caught and transported above the second bar-shaped element as well as releasing means (27, 28), by means of which it can be acted upon the catch means in a controllable way and selectable positions along the transport path, in order to make the respective catch means release the strap, are provided.

7. Transfer device according to one of the claims 1 to 6, **characterized in that** it has receiving means (5, 7) for holding the second bar-shaped element (4) in a releasable way.

8. Transfer device according to one of the claims 1 to 7, **characterized in that** a rotating transport means (8), particularly a chain or a toothed belt, is provided for transporting the catch means.

9. Transfer device according to one of the claims 1 to 8, **characterized in that** an arrangement is done at the first bar-shaped element (30) in such a way that the element and a second bar-shaped element (4) held in the receiving means come to lie substantially coaxially.

10. Transfer device according to one of the claims 1 to 9, **characterized in that** the catch means are formed as gripping means and **in that** the gripping means are particularly formed by hooks (46, 47) which are pivotable about a pivot axis (41), the hooks being pretensioned in a gripping position by a spring means (45) and being pivotable in the release position by pressurizing a release element (42) against the spring force.

11. Transfer device according to one of the claims 1 to 10, **characterized in that** the releasing means is formed as a releasing block (28) which can be moved along the transport means in the transport direction.

12. Transfer device according to claim 11, **characterized in that** the releasing block has a steering cam (28') by means of which it can act upon the release element.

13. Transfer device according to claim 11 or 12, **characterized in that** the releasing block is attached to an actuatable further transport means, particularly a toothed belt (27).

14. Transfer device according to one of the claims 1 to 13, **characterized in that** it has a control (50) by means of which the bar changing device (60) and the releasing means are controllable.

15. Arrangement comprising a first bar-shaped element (30) which is a blade of a catch device (3) which catches packaging units with straps at the exit of a sealing device (2) and transports them hanging at the straps along the blade, and a transfer device (1) according to one of the claims 1 to 14, which grips the packaging units in the end zone of the blade.

16. Arrangement according to claim 15, **characterized in that** the blade has a longitudinal groove which is opened on the top side, being spanned by the straps and in which the catch means formed as gripping means grip.

## Revendications

1. Dispositif de transfert (1) dans lequel une barre (4) qui est tenue par des moyens de réception (5, 7) dans une position de chargement est chargeable avec des unités d'emballage qui sont suspendues à la barre, comprenant un magasin de barres (51) et un dispositif de changement de barres (60), **caractérisé en ce que** le dispositif de changement de barres (60) a un chariot de changement de barres (61) à l'aide duquel une barre chargée (4) peut être emportée des moyens de réception (5, 7) et une deuxième barre (4') est insérable dans les moyens de réception par un mouvement du chariot d'une position initiale dans la direction du chariot, la partie du chariot (66) exécutant le mouvement d'emportée de la barre chargée étant adaptée à exécuter un mouvement vers le bas pendant le retour du chariot dans la position initiale et un mouvement vers le haut dans la position initiale.

2. Dispositif de transfert selon la revendication 1, **caractérisé en ce qu'**il a un moyen de transport (52) pour recevoir une pluralité de barres chargées, étant chargeable avec une barre chargée par le chariot.

3. Dispositif de transfert selon la revendication 2, **caractérisé en ce que** le moyen de transport est un convoyeur à chaînes ou un convoyeur à courroies crantées avec des rouleaux de déviation (53'), qui agit sur les barres des deux côtés, les chaînes ou les courroies duquel passent d'une direction essentiellement verticale dans une direction essentiellement horizontale, une barre emportée par le chariot de changement de barres pouvant être prise par le moyen de transport et pouvant être transportée sur une plus longue distance dans une direction horizontale.

4. Dispositif de transfert selon l'une des revendications 1 à 3, **caractérisé en ce que** le chariot peut être chargé avec une barre du magasin de barres dans la position initiale de sorte que le magasin de barres soit adapté à recevoir une pluralité des barres qui viennent se placer verticalement au dessus du chariot, la plus basse barre rentrant dans le chariot dépendant de la gravitation.

5. Dispositif de transfert selon la revendication 4, **caractérisé en ce qu'**une retenue (58) contrôlable au dispositif ou au magasin est prévue dans le magasin pour la barre plus basse (4") et une autre retenue (59) contrôlable de manière synchrone pour la deuxième plus basse barre est prévue dans le magasin.

6. Dispositif de transfert (1) selon l'une des revendications 1 à 5, **caractérisé en ce qu'**elle est adaptée à transmettre des unités d'emballage arrangées de manière suspendue à un premier élément (30) en forme de barre (30) à un deuxième élément en forme de barre (4) à l'aide de sangles (90-96), des moyens de captage (10-22) par lesquels les sangles peuvent être captées et transportées au dessus du deuxième élément en forme de barre et des moyens de desserrage (27, 28) par lesquels il est possible d'agir sur les moyens de captage de manière contrôlable dans des positions arbitraires le long du chemin de transport afin de faire le moyen de captage correspondant libérer la sangle, étant prévus.

7. Dispositif de transfert selon l'une des revendications 1 à 6, **caractérisé en ce qu'**il a des moyens de réception (5, 7) pour retenir le deuxième élément (4) en forme de barre de manière décrochable.

8. Dispositif de transfert selon l'une des revendications 1 à 7, **caractérisé en ce qu'**un moyen de transport rotatif (8), particulièrement une chaîne ou une courroie crantée, est prévu pour le transport les moyens de captage.

9. Dispositif de transfert selon l'une des revendications 1 à 8, **caractérisé en ce qu'**un arrangement est effectué au premier élément (30) en forme de barre de sorte que le premier élément et un deuxième élément (4) qui est retenu dans les moyens de réception viennent à être posés de manière essentiellement coaxiale.

10. Dispositif de transfert selon l'une des revendications 1 à 9, **caractérisé en ce que** les moyens de captage sont des moyens de préhension et **en ce que** les moyens de préhension sont particulièrement des crochets (46, 47) pivotables autour d'un axe de rotation (41), les crochets étant précontraints par un ressort (45) dans une position d'accrochage et étant pivotables dans la position libre par une pression sur un élément de desserrage (42) en sens inverse de la tension du ressort.

11. Dispositif de transfert selon l'une des revendications 1 à 10, **caractérisé en ce que** le moyen de desserrage est un bloque de desserrage (28) qui est mobile le long du moyen de transport dans la direction de transport.

12. Dispositif de transfert selon la revendication 11, **caractérisé en ce que** le bloque de desserrage a une came de commande (28') par laquelle il est possible d'agir sur l'élément de desserrage.

13. Dispositif de transfert selon la revendication 11 ou 12, **caractérisé en ce que** le bloque de desserrage est attaché à un autre moyen de transport actionnable, particulièrement une courroie crantée (27).

14. Dispositif de transfert selon l'une des revendications 1 à 13, **caractérisé en ce qu'**il a une commande (50) par laquelle le dispositif de changement de barres (60) et le moyen de desserrage sont contrôlable.

15. Arrangement comprenant un premier élément (30) en forme de barre qui est une lame d'un dispositif d'accrochage (3) qui accroche des unités d'emballage ayant des sangles à la sortie d'un dispositif de serrage (2) et qui les transporte suspendues aux sangles le long de la lame, et un dispositif de transfert (1) selon l'une des revendications 1 à 14 qui prend les unités d'emballage dans la zone de sortie de la lame.

16. Arrangement selon la revendication 15, **caractérisé en ce que** la lame a une rainure longitudinale ouverte en haut, qui peut être recouverte des sangles et dans laquelle les moyens de captage en forme de moyen de préhension prennent.
